# EUROPEAN PATENT APPLICATION

(11) **EP 4 786 375 A1**
(43) Date of publication of application: **05.08.2026**
(21) Application number: 24881973.2
(22) Date of filing: 08.07.2024
(51) Int. Cl.: B65G 1/137

(54) **ARTICLE SORTING FACILITY**

(30) Priority: 24.10.2023 JP 2023182813
(71) Applicant: Daifuku Co., Ltd., Osaka-shi, Osaka 555-0012 (JP)
(72) Inventor: TAKEUCHI Akira, Gamo-gun, Shiga 529-1692 (JP); KONAGAYA Toru, Gamo-gun, Shiga 529-1692 (JP); HATANAKA Yuto, Gamo-gun, Shiga 529-1692 (JP)
(74) Representative: Grosse, Felix Christopher
(86) International application number: PCT/JP2024/024559
(87) International publication number: WO 2025/088855

(57) **Abstract**

A connection area (E2) includes a plurality of X-direction paths arranged in a Y-direction. The plurality of X-direction paths are paths on which a plurality of transport vehicles (20) travel in an X-direction. Each of a plurality of exits (19) is associated with an X-direction corresponding path (51) among X-direction corresponding paths (51) that are the plurality of X-direction paths. The X-direction corresponding path (51) associated with a corresponding exit (19) among the plurality of exits (19) and having the corresponding exit (19) closer to either outermost end of the connection area (E2) in the X-direction is disposed farther on a second side (Y2) in the Y-direction.

## Description

### FIELD

The present invention relates to an article sorting facility in which multiple transport vehicles transport articles.

### BACKGROUND

Known article sorting facilities in which multiple transport vehicles transport articles are used in, for example, distribution warehouses. For example, Japanese Unexamined Patent Application Publication No. 2020-100482 (Patent Literature 1) describes an article sorting facility in which multiple transport vehicles (V) transport articles from multiple supply units (90) to multiple receivers (80).

### CITATION LIST

### PATENT LITERATURE

Patent Literature 1: Japanese Unexamined Patent Application Publication No. 2020-100482

### BRIEF SUMMARY

### TECHNICAL PROBLEM

In the article sorting facility described in Patent Literature 1, the transport vehicles (V) each travel from one of the supply units (90) to one of the receivers (80). Thus, the transport vehicles (V) may have their paths intersecting with each other. In this case, one transport vehicle (V) is allowed to travel, whereas another transport vehicle (V) is stopped. Transport vehicles that are stopped and are waiting for another transport vehicle may concentrate at specific positions, causing congestion and thus lowering the transport efficiency.

One or more aspects are directed to an article sorting facility in which the efficiency of transporting articles with the transport vehicles is less likely to decrease.

### SOLUTION TO PROBLEM

An article sorting facility according to an aspect of the present disclosure is an article sorting facility in which a plurality of transport vehicles travel on a floor and transport articles to sort the articles. The article sorting facility includes a plurality of supply units that supply the articles to the plurality of transport vehicles, and a plurality of receivers that receive the articles from the plurality of transport vehicles. The floor includes a plurality of receiving areas, a plurality of supply areas, and a connection area. The plurality of receiving areas each include receivers, among the plurality of receivers, arranged in an X-direction. The X-direction is along the floor. The plurality of supply areas each include a supply unit among the plurality of supply units. The plurality of supply areas are arranged on a first side in a Y-direction relative to the plurality of receiving areas. The Y-direction is along the floor and perpendicular to the X-direction. The plurality of supply areas each include an exit among a plurality of exits arranged in the X-direction. The connection area extends in the Y-direction and the X-direction and connects the plurality of exits and the plurality of receiving areas to each other. The connection area includes a plurality of X-direction paths arranged in the Y-direction. The plurality of X-direction paths are paths on which the plurality of transport vehicles travel in the X-direction. Each of the plurality of exits is associated with an X-direction corresponding path among X-direction corresponding paths that are the plurality of X-direction paths. When entering the connection area through an exit among the plurality of exits to travel in the X-direction, each of the plurality of transport vehicles turns toward a first side or a second side in the X-direction on the X-direction corresponding path associated with the exit to travel on the X-direction corresponding path. The X-direction corresponding path associated with a corresponding exit among the plurality of exits and having the corresponding exit closer to either outermost end of the connection area in the X-direction is disposed farther on a second side in the Y-direction.

This structure reduces the likelihood that a transport vehicle traveling from an exit to an X-direction corresponding path is obstructed by another transport vehicle before reaching the X-direction corresponding path at positions closer to the X-direction corresponding path in the Y-direction from the exit. This structure also reduces the likelihood that a transport vehicle traveling from an exit to an X-direction corresponding path is obstructed by another transport vehicle before reaching the X-direction corresponding path at the positions closer to either outermost end of the connection area in the X-direction. This structure thus achieves a similar level of easiness in each of the multiple supply areas for the transport vehicle to travel from the exit to the X-direction corresponding path. This reduces the likelihood that the transport vehicles stopping for other transport vehicles concentrate near the exit of a specific supply area. The efficiency of transporting articles with the transport vehicles is thus less likely to decrease in the overall article sorting facility.

### BRIEF DESCRIPTION OF DRAWINGS

FIG. 1 is a top view of an article sorting facility according to a first embodiment.
FIG. 2 is a front view of a receiving area in FIG. 1.
FIG. 3 is a control block diagram of the article sorting facility in FIG. 1.
FIG. 4 is a diagram of a first layer in the article sorting facility in FIG. 1.
FIG. 5 is a diagram of a second layer in the article sorting facility in FIG. 1.
FIG. 6 is a diagram describing corresponding connection paths in FIG. 4.
FIG. 7 is a diagram of a first layer in an article sorting facility according to a second embodiment.
FIG. 8 is a diagram of a first layer in an article sorting facility according to a third embodiment.
FIG. 9 is a diagram of a first layer in an article sorting facility according to a fourth embodiment.
FIG. 10 is a top view of an article sorting facility according to a fifth embodiment.
FIG. 11 is a front view of a receiving area in FIG. 10.
FIG. 12 is a top view of an article sorting facility according to a sixth embodiment.

### DETAILED DESCRIPTION

### First Embodiment

An article sorting facility 10 according to a first embodiment will be described below with reference to the drawings.

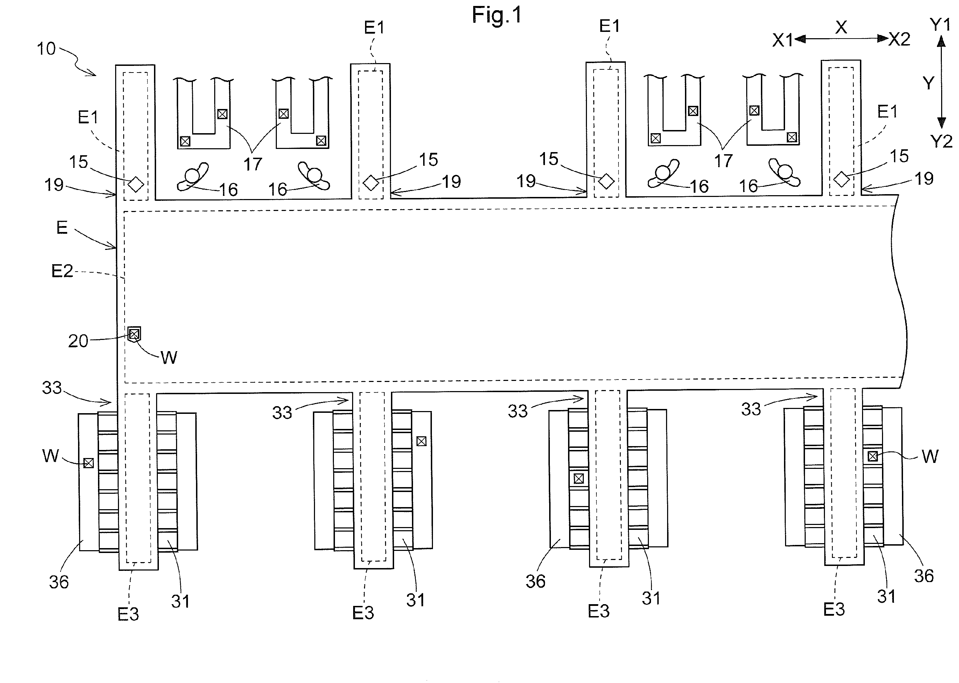

FIG. 1 is a top view of the article sorting facility 10 in which multiple transport vehicles 20 transport articles W. In the article sorting facility 10 according to the present embodiment, the multiple transport vehicles 20 travel on a floor E and transport the articles W to sort the articles W. In the present embodiment, the article sorting facility 10 includes the transport vehicles 20, the floor E, multiple supply units 15, and multiple receivers 31. The multiple supply units 15 each supply the articles W to the transport vehicles 20. The multiple receivers 31 each receive the articles W from the transport vehicles 20.

In the present embodiment, an operating entity 16 transfers articles W to the transport vehicles 20 at each supply unit 15. The operating entity herein refers to, for example, an operator or an operating device, or both. The operating entity 16 transfers the articles W from a supply transporter 17 to the transport vehicles 20. The supply transporter 17 transports articles W from an automated warehouse (not shown). Examples of the supply transporter 17 include a belt conveyor, a crane, and a robotic arm.

A specific direction along the floor E is herein referred to as the Y-direction. A direction along the floor E and perpendicular to the Y-direction is referred to as the X-direction. One side in the Y-direction is referred to as a first side Y1 in the Y-direction, and the other side in the Y-direction is referred to as a second side Y2 in the Y-direction. One side in the X-direction is referred to as a first side X1 in the X-direction, and the other side in the X-direction is referred to as a second side X2 in the X-direction. The vertical direction is referred to as the Z-direction. Examples of the floor E include a travel surface on which vehicles travel and a floor in buildings, ships, and other facilities. In the present embodiment, the floor E is a travel surface on an indoor platform.

The floor E has supply areas E1 with the supply units 15 and receiving areas E3 with the receivers 31. The supply areas E1 are arranged on the first side Y1 in the Y-direction relative to the receiving areas E3. The floor E includes a connection area E2 connecting the receiving areas E3 and the supply areas E1. The connection area E2 extends in the Y-direction and the X-direction to connect multiple exits 19 and the multiple receiving areas E3 to each other. Each of the supply areas E1, the connection area E2, and the receiving areas E3 on the floor E may be a physically-divided area or a virtually defined area on the floor E. In the present embodiment, the boundaries between the supply areas E1 and the connection area E2 are virtual boundaries defined on the floor E. In the present embodiment, the receiving areas E3 at the outermost ends in the X-direction define the outer edges of the floor E.

In the present embodiment, the multiple supply areas E1 are arranged and include the respective supply units 15. The multiple receiving areas E3 are arranged and include the respective receivers 31. The multiple supply areas E1 are arranged in the X-direction. The multiple receiving areas E3 are arranged in the X-direction. The connection area E2 connects the supply areas E1 and the receiving areas E3 to allow the transport vehicles 20 to travel between the areas.

In the present embodiment, the exits 19 in the respective supply areas E1 are arranged in the X-direction on the floor E. In the illustrated example, the multiple supply areas E1 each include a single exit 19. The supply areas E1 are areas in the form of aisles extending in the Y-direction.

The multiple receiving areas E3 each include an aisle area extending in the Y-direction. In the illustrated example, the receiving areas E3 are the aisle areas. The multiple receivers 31 are arranged in the Y-direction along the respective receiving areas E3.

In the present embodiment, the multiple receiving areas E3 are connected to one another with the connection area E2. The receiving areas E3 have first ends 33 on the first side Y1 in the Y-direction. In the present embodiment, the multiple receiving areas E3 are arranged in the X-direction on the floor E. The first ends 33 of the receiving areas E3 are connected to one another with the connection area E2. In the illustrated example, the exits 19 in the supply areas E1 are aligned with the respective first ends 33 of the receiving areas E3 as viewed in the Y-direction. The connection area E2 connects the exits 19 and the first ends 33 to each other to allow the transport vehicles 20 to travel between them.

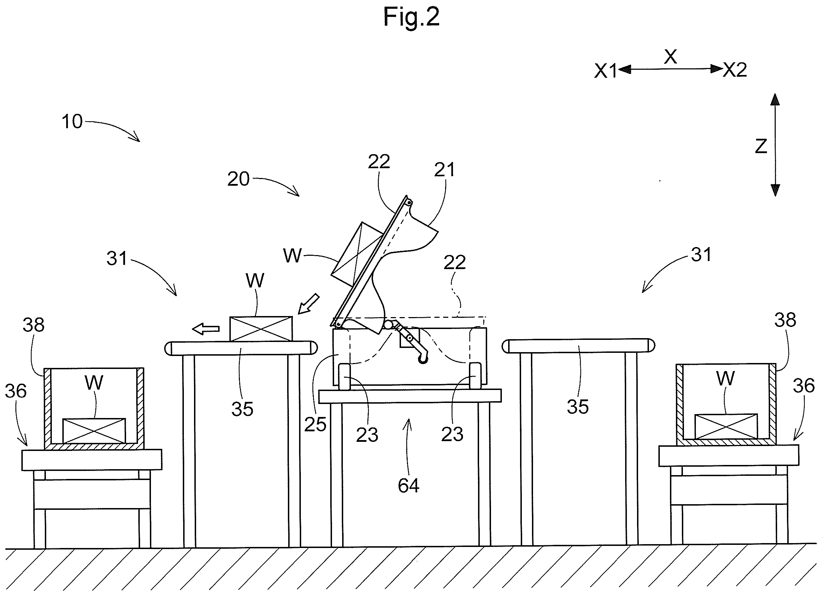

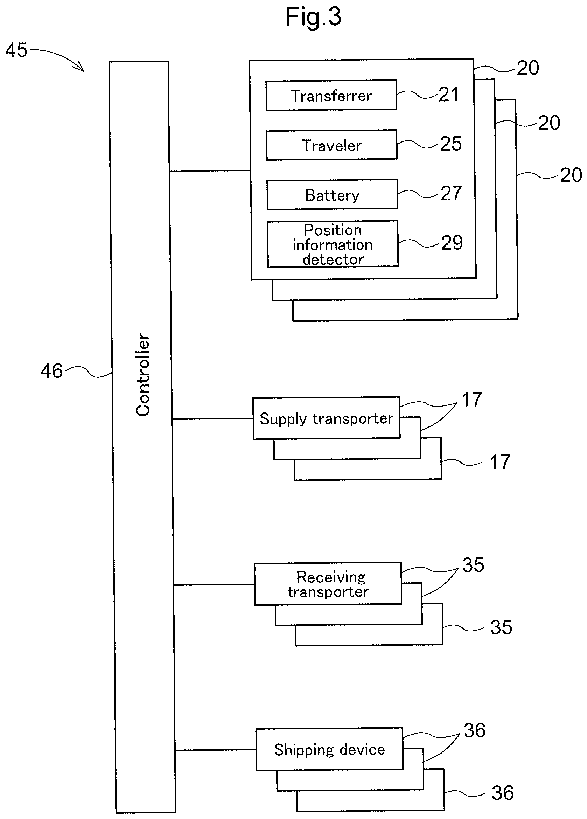

FIG. 2 is a front view of a receiving area E3. In the present embodiment, the receiving area E3 has the two ends in the X-direction along which the multiple receivers 31 are arranged in the Y-direction. In the present embodiment, each transport vehicle 20 includes a transferrer 21 that transfers an article W from the transport vehicle 20 to a receiver 31. The transferrer 21 has a receiving surface 22 on which the article W is placeable. The receiving surface 22 is switchable between a horizontal orientation and a tilting orientation. While being transported, the article W is placed on the receiving surface 22 in the horizontal orientation. When the receiving surface 22 is in the tilting orientation, the article W is transferred to the receiver 31. In the present embodiment, each transport vehicle 20 includes a traveler 25. The traveler 25 includes multiple wheels 23 that roll on the travel surface on the floor E. Examples of the transport vehicles 20 include electric vehicles that travel on electricity supplied from storage batteries or fuel cells, or through contact or contactless power feed from the floor E and vehicles with internal combustion engines. In the present embodiment, the traveler 25 in each transport vehicle 20 incorporates a storage battery 27 (refer to FIG. 3). In the present embodiment, the transport vehicles 20 are electric automated guided vehicles.

In the present embodiment, each receiver 31 includes a receiving transporter 35. Articles W transferred to the receivers 31 are transported in the X-direction by the receiving transporters 35 to be placed in containers 38 for the respective receivers 31. In the present embodiment, the receiving transporters 35 are adjacent to shipping devices 36. The containers 38 are arranged on the shipping devices 36. When articles W of a type and in a quantity specified in one piece of order information are placed in a container 38, the corresponding shipping device 36 transports the container 38 to a shipping location. Examples of the receiving transporters 35 include a belt conveyor, a crane, and a robotic arm. Examples of the shipping devices 36 include a belt conveyor, a stacker crane, and an automated guided vehicle.

FIG. 3 is a control block diagram of the article sorting facility 10 according to the present embodiment. In the present embodiment, the article sorting facility 10 includes a control system 45 that controls the transport vehicles 20. In the illustrated example, the control system 45 includes a controller 46 that controls the transferrer 21 and the traveler 25 in each transport vehicle 20, the supply transporters 17, the receiving transporters 35, and the shipping devices 36. The controller 46 includes an arithmetic processor such as a central processing unit (CPU) and a main storage such as a random-access memory (RAM) or a readonly memory (ROM) that can be referenced by the arithmetic processor. The functions of the controller 46 (e.g., the function of controlling the travel of the transport vehicles 20) are implemented by the hardware in the controller 46 cooperating with a program executed on the arithmetic processor or other pieces of hardware. More specifically, each function of the controller 46 is implemented by the controller 46 executing a program stored in a storage (e.g., the main storage or a storage separate from the main storage). In other words, the program (e.g., an article transport program) for causing a computer (a computer in the control system 45) to implement the functions of the controller 46 is stored in a storage that can be referenced by the computer. The program is provided by, for example, a storage medium or through a communication network. The provided program is then stored into a storage that can be referenced by the computer. In the present embodiment, the controller 46 (more specifically, the arithmetic processor in the controller 46) functions as the computer. The controller 46 may be a set of multiple pieces of hardware (multiple separate pieces of hardware) that can communicate with one another through wires or wirelessly, rather than a single piece of hardware. For example, the controller 46 may include a host controller disposed in a control facility (not shown) to control the transport vehicles 20 and controllers mounted on the respective transport vehicles 20.

In the present embodiment, the floor E is divided into multiple virtual subareas Au in a grid as viewed in the Z-direction. The travel paths for the transport vehicles 20 connect any number of virtual subareas Au to one another. In the present embodiment, each transport vehicle 20 includes a position information detector 29 (refer to FIG. 3). Each virtual subarea Au includes a position information holder. When the transport vehicles 20 travel on the travel paths, the position information detector 29 in each transport vehicle 20 detects position information held by the position information holder in each virtual subarea Au. Examples of the position information holder include a barcode (one-dimensional code), a two-dimensional code, and a radio-frequency identification tag. The position information detected by the position information detector 29 is transmitted from each transport vehicle 20 to the controller 46 in the control system 45.

In the present embodiment, the control system 45 provides, for example, a transport command to each transport vehicle 20. The transport command specifies the origin and the destination of an article W. In the present embodiment, the origin is one of the supply units 15. In the present embodiment, the destination is one of the receivers 31. In the present embodiment, the transport command also specifies the travel path for the transport vehicle 20 to travel from the origin to the destination. Upon receiving the transport command from the control system 45, the transport vehicle 20 receives an article W at the specified origin and transports the article W to the specified destination.

The transport command in the present embodiment defines an outgoing path for a transport vehicle 20 to travel from one of the supply units 15 to a terminal end of one of the receiving areas E3. The transport command in the present embodiment defines a return path for a transport vehicle 20 to travel from a terminal end of one of the receiving areas E3 to one of the supply units 15. In the present embodiment, the terminal end of the receiving area E3 is an end of the receiving area E3 on the second side Y2 in the Y-direction.

In the present embodiment, the control system 45 performs, at each receiver 31, a batch process of receiving articles W of a type and in a quantity specified in one piece of order information. In the present embodiment, one container 38 is used for one piece of order information. The control system 45 places the articles W of the type and in the quantity specified in one piece of order information in the batch process into a container 38 (refer to FIG. 2) adjacent to the receiver 31. When the batch process is complete, or in other words, when all the articles W of the type and in the quantity specified in one piece of order information are placed in the container 38, the container 38 is transported to the shipping location. Another container 38 corresponding to a subsequent piece of order information is then placed adjacent to the receiver 31. The control system 45 performs a subsequent batch process and places the articles W of the type and in the quantity specified in the subsequent piece of order information into the other container 38.

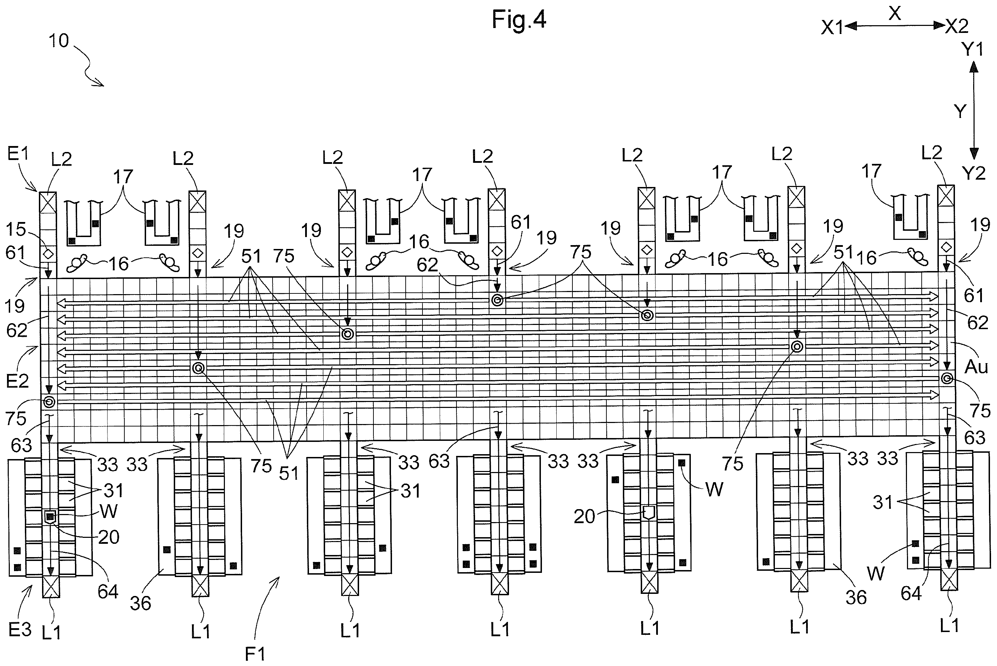

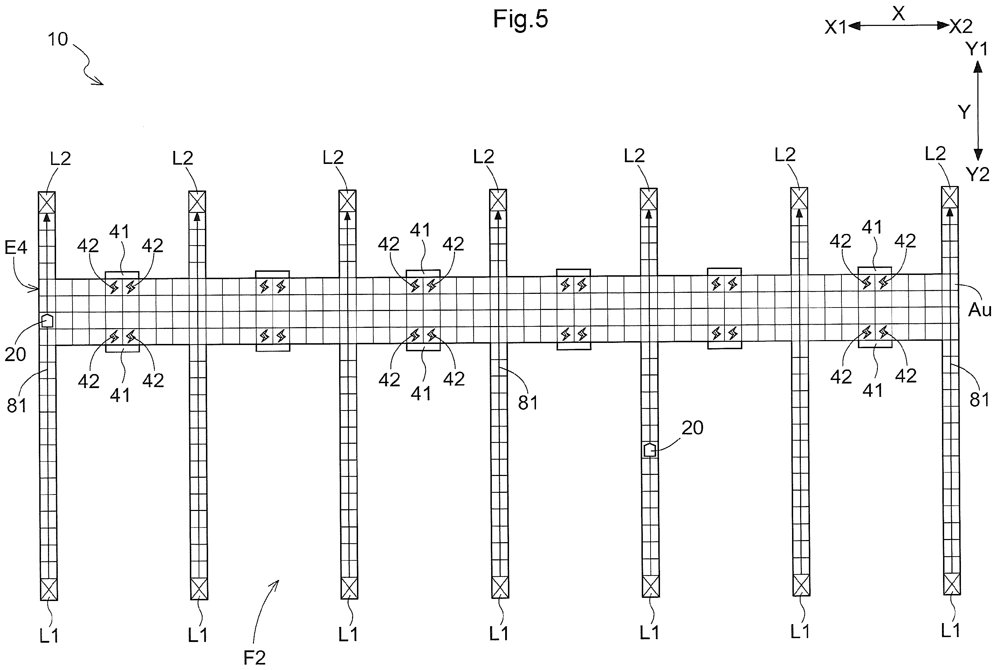

In the present embodiment, the floor E includes multiple layers on each of which the transport vehicles 20 are travelable. The layers are at different heights in the Z-direction. FIG. 4 is a diagram of a first layer F1 in the article sorting facility 10. FIG. 5 is a diagram of a second layer F2 in the article sorting facility 10. In the example in FIGs. 4 and 5, the floor E includes the first layer F1 and the second layer F2 adjacent to each other in the Z-direction. Although the second layer F2 is disposed above the first layer F1 in the present embodiment, the second layer F2 may be below the first layer F1. In the present embodiment, the first layer F1 includes the supply areas E1, the connection area E2, and the receiving areas E3.

In the present embodiment, the connection area E2 includes charging positions 42 for charging the transport vehicles 20 with chargers 41. This allows efficient use of the connection area E2, which includes no supply unit 15 and no receiver 31. In the illustrated example, each charger 41 is disposed adjacent to the connection area E2. The charging positions 42 are arranged to allow multiple transport vehicles 20 to stop at the charging positions 42.

In the present embodiment, each transport vehicle 20 moves to and stops at a charging position 42 when the remaining battery level is less than a predetermined level (e.g., less than 50% of the full capacity). At the charging position 42, the storage battery 27 (refer to FIG. 3) in the transport vehicle 20 can be charged rapidly. The charger 41 may be a contactless power feeder or a contact power feeder. In the present embodiment, the controller 46 included in the control system 45 (described later) obtains the remaining level of the storage battery 27 in each transport vehicle 20 and causes any transport vehicle 20 with less than the predetermined battery level to move to the charging position 42.

In the present embodiment, the article sorting facility 10 includes first lifters L1 connecting the first layer F1 and the second layer F2 to lift and lower the transport vehicles 20. In the illustrated example, the first lifters L1 are on the second side Y2 in the Y-direction of the floor E. The first lifters L1 are connected to the receiving areas E3 on the first layer F1 and to the second layer F2. The first lifters L1 may autonomously transport the transport vehicles 20 or may be controlled by the control system 45. Examples of the first lifters L1 include lifters that circulate the transport vehicles 20 along a predetermined annular path, lifters that lift and lower the transport vehicles 20 in the Z-direction, and multicopters or cranes that can transport the transport vehicles 20.

In the present embodiment, the article sorting facility 10 includes second lifters L2 connecting the first layer F1 and the second layer F2 to lift and lower the transport vehicles 20. In the illustrated example, the second lifters L2 are on the second side Y2 in the Y-direction of the floor E. The second lifters L2 are connected to the supply areas E1 on the first layer F1 and to the second layer F2. The first lifters L1 and the second lifters L2 are spaced from each other in the horizontal direction. The second lifters L2 may autonomously transport the transport vehicles 20 or may be controlled by the control system 45. Examples of the second lifters L2 include lifters that circulate the transport vehicles 20 along a predetermined annular path, lifters that lift and lower the transport vehicles 20 in the Z-direction, and multicopters or cranes that can transport the transport vehicles 20.

In the present embodiment, the second layer F2 includes return aisles 81 on which the transport vehicles 20 travel. The first lifters L1 and the second lifters L2 are connected to the return aisles 81 on the second layer F2 to allow the transport vehicles 20 to travel. In the illustrated example, the second lifters L2 are connected to the return aisles 81 and the first layer F1. The second lifters L2 may be directly or indirectly connected to the return aisles 81. The second lifters L2 may be directly or indirectly connected to the supply areas E1. After transporting the articles W to the receivers 31 in the receiving areas E3, the transport vehicles 20 travel on the return aisles 81, each of which is a part of the return path described above. In the present embodiment, each return aisle 81 is a one-way path.

In the present embodiment, the first lifters L1 are connected to the start ends of the return aisles 81 and the terminal ends of the receiving areas E3. The second lifters L2 are connected to the terminal ends of the return aisles 81 and the supply areas E1. In the illustrated example, the return aisles 81 are arranged on the second layer F2 and each extend in the Y-direction. In the present embodiment, the second layer F2 includes an aisle connection area E4 connecting the multiple return aisles 81 to allow the transport vehicles 20 to travel between the return aisles 81. In the illustrated example, each aisle connection area E4 is disposed between return aisles 81 adjacent to the aisle connection area E4 in the X-direction. The aisle connection areas E4 include the charging positions 42 for charging the transport vehicles 20.

In the example in FIG. 4, the connection area E2 includes multiple X-direction paths arranged in the Y-direction. The X-direction paths are paths on which the transport vehicles 20 travel in the X-direction. The connection area E2 includes multiple Y-direction paths arranged in the X-direction. The Y-direction paths are paths on which the transport vehicles 20 travel in the Y-direction. In the present embodiment, each of the multiple exits 19 is associated with one X-direction path as an X-direction corresponding path 51. In FIG. 4, for example, the X-direction paths that can be the X-direction corresponding paths 51 are indicated by the outlined arrows extending in the X-direction.

In the present embodiment, each of the multiple exits 19 is associated with one X-direction path as an X-direction corresponding path 51. The difference between the maximum value and the minimum value of the number of exits 19 associated with the respective X-direction paths is not greater than 1. In the illustrated example, the difference between the maximum value and the minimum value is 0.

In the example in FIG. 4, the X-direction paths greater than or equal in number to the exits 19 are arranged in the Y-direction in the connection area E2. In the example in FIG. 4, each of the multiple exits 19 is associated with a different one of the X-direction paths as an X-direction corresponding path 51. In the example in FIG. 4, the number of X-direction paths in the connection area E2 is the same as the number of exits 19, and the same as the number of X-direction corresponding paths 51.

In the present embodiment, when a transport vehicle 20 entering the connection area E2 through an exit 19 travels in the X-direction, the transport vehicle 20 turns toward the first side X1 in the X-direction or the second side X2 in the X-direction on the X-direction corresponding path 51 associated with the exit 19, and travels on the X-direction corresponding path 51.

In the present embodiment, an X-direction corresponding path 51 associated with the corresponding exit 19 among the multiple exits 19 and having the corresponding exit 19 closer to either outermost end of the connection area E2 in the X-direction is disposed farther on the second side Y2 in the Y-direction. When multiple exits 19 adjacent to each other are associated with the same X-direction corresponding path 51, these exits 19 may be referred to as one exit 19 (in other words, an exit group described later).

Travel paths for the transport vehicles 20 traveling toward the respective exits 19 in the multiple supply areas E1 are supply paths 61. Travel paths for the transport vehicles 20 traveling in the Y-direction after entering the connection area E2 through the respective exits 19 are Y-direction corresponding paths 62. Travel paths for the transport vehicles 20 traveling from the respective first ends 33 toward the terminal ends of the corresponding receiving areas E3 are receiving outgoing paths 64. In the present embodiment, the supply paths 61 extend in the Y-direction and are connected linearly to the respective Y-direction corresponding paths 62. Each supply path 61 is a one-way path. Each receiving outgoing path 64 is a one-way path.

In the present embodiment, the Y-direction paths greater than or equal in number to the first ends 33 are arranged in the X-direction in the connection area E2. Each of the multiple first ends 33 is associated with a different one of the Y-direction paths as a corresponding connection path 63. In the illustrated example, the corresponding connection paths 63 are connected linearly to the respective receiving outgoing paths 64. Each corresponding connection path 63 is a one-way path.

In the present embodiment, the transport vehicles 20 entering the connection area E2 through the respective exits 19 turn toward the first side X1 in the X-direction or the second side X2 in the X-direction at turning positions 75 at which the Y-direction corresponding paths 62 and the X-direction corresponding paths 51 associated with the respective exits 19 intersect. In the illustrated example, each of the X-direction paths that can be an X-direction corresponding path 51 is a one-way path. At least one of the X-direction paths that can be an X-direction corresponding path 51 is a one-way path travelable in either of the directions opposite from each other from a turning position 75. Each of the Y-direction paths that can be a Y-direction corresponding path 62 is a one-way path.

In the present embodiment, the turning positions 75 are arranged in the form of a V shape as viewed vertically. In the illustrated example, the turning positions 75 are aligned with the respective exits 19 as viewed in the Y-direction. When multiple exits 19 adjacent to each other are associated with the same X-direction corresponding path 51 and the corresponding turning positions 75 are also adjacent to each other, these turning positions 75 adjacent to each other may be referred to as one turning position 75 (in other words, a turning position group described later).

In the present embodiment, when a transport vehicle 20 entering the connection area E2 through an exit 19 does not travel on the X-direction corresponding path 51, the transport vehicle 20 travels toward the first end 33 without turning at the turning position 75. In the illustrated example, when traveling toward the first end 33 aligned with the exit 19 as viewed in the Y-direction, the transport vehicle 20 travels on the corresponding connection path 63 associated with the first end 33 without traveling on the X-direction corresponding path 51 associated with the exit 19.

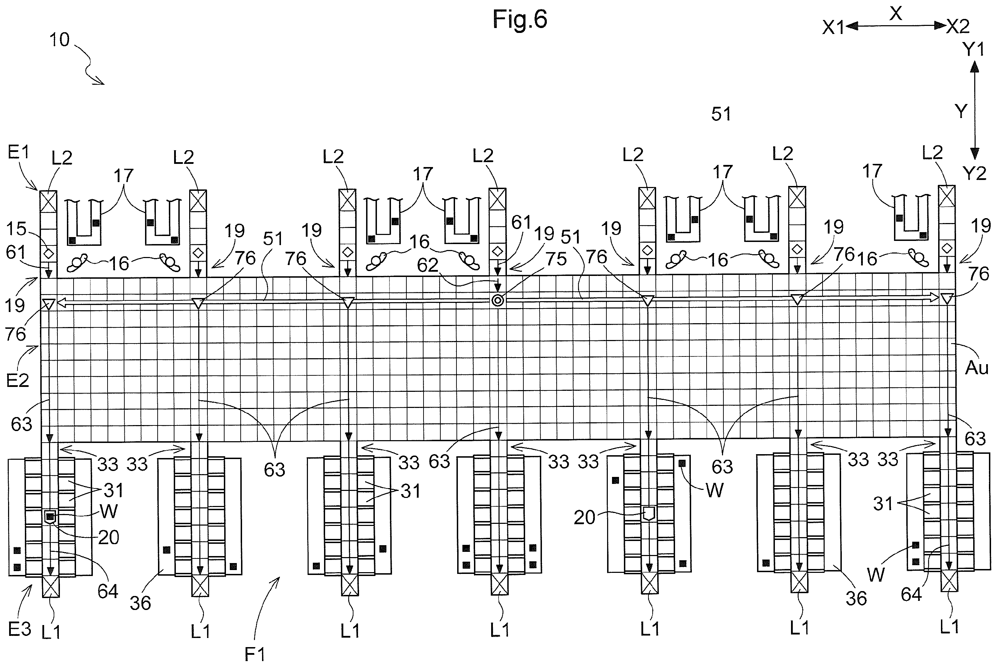

FIG. 6 is a diagram describing the corresponding connection paths 63 and positions 76. FIG. 6 selectively illustrates the Y-direction corresponding path 62, the turning position 75, and the X-direction corresponding path 51 associated with one of the exits 19. In the present embodiment, a transport vehicle 20 traveling on the X-direction corresponding path 51 turns toward the second side Y2 in the Y-direction at the position 76 associated with the receiving area E3 of a destination in the X-direction to enter the receiving area E3 of the destination. The corresponding connection paths 63 associated with the respective first ends 33 connect the positions 76 to the first ends 33 to allow the transport vehicles 20 to travel between them. In the illustrated example, the positions 76 are aligned with the respective first ends 33 as viewed in the Y-direction. As shown in FIG. 4, the Y-direction corresponding paths 62 associated with the respective exits 19 are aligned with the corresponding connection paths 63 associated with the respective first ends 33 as viewed in the Y-direction.

### Second Embodiment

An article sorting facility 10 according to a second embodiment will be described below with reference to the drawings. In the present embodiment, each of the multiple exits 19 is associated with one X-direction path as an X-direction corresponding path 51, as in the first embodiment. However, each X-direction corresponding path 51 is associated with multiple exits 19, unlike in the first embodiment. The present embodiment will be described below focusing on its differences from the first embodiment. The components not described below are the same as those in the first embodiment.

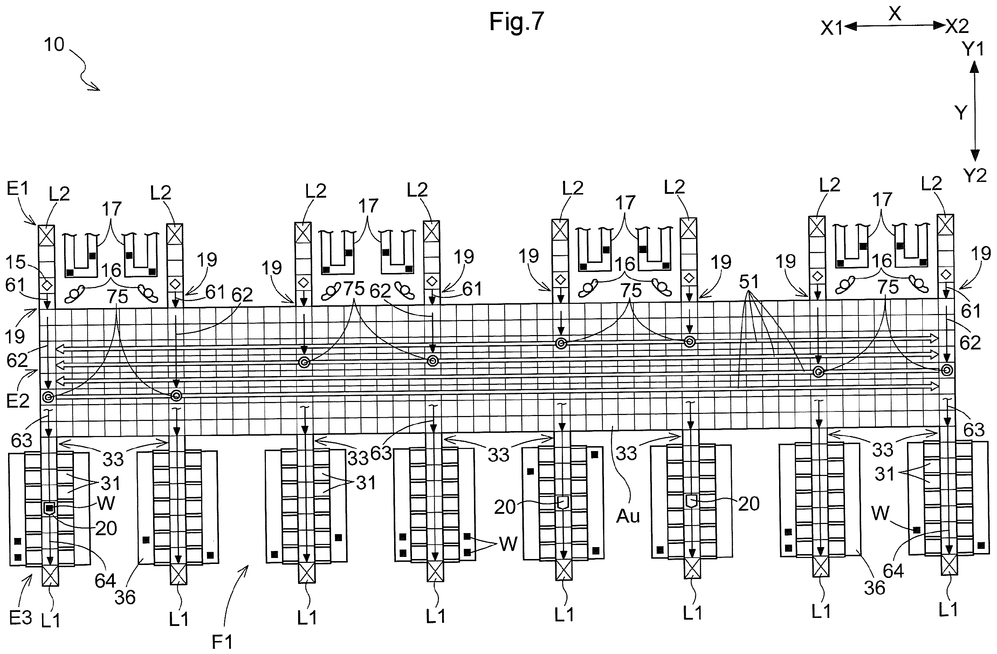

FIG. 7 is a diagram of a first layer F1 in the article sorting facility 10 according to the present embodiment, corresponding to FIG. 4. In an example described below, N is an integer greater than or equal to 1. N may be an integer greater than or equal to 2. In the example in FIG. 7, N is 2. In the present embodiment, the number of exits 19 is N to N + 1 times the number of X-direction paths that can be the X-direction corresponding paths 51. In the present embodiment, each X-direction corresponding path 51 is associated with either N exits 19 or N + 1 exits 19. In the example in FIG. 7, the number of exits 19 is N times the number of X-direction corresponding paths 51. Each X-direction corresponding path 51 is associated with N exits 19.

In an example described below, M is equal to either N or N + 1. In the example in FIG. 7, M is equal to N. A group of M exits 19 associated with one X-direction path is referred to as a corresponding exit group. In the present embodiment, each X-direction corresponding path 51 having the corresponding exit group closer to either outermost end of the connection area E2 in the X-direction is disposed farther on the second side Y2 in the Y-direction. The corresponding exit group includes, for example, multiple (two in the illustrated example) exits 19 arranged continuously in the X-direction.

For example, when N = 2 and the number of X-direction paths that can be the X-direction corresponding paths 51 is 4, the number of exits 19 is 8 to 12 inclusive, and M that is the number of exits 19 in the corresponding exit group is 2 or 3. More specifically, when the number of exits 19 is 9, M is 3 for one of the corresponding exit groups, and M is 2 for the other three corresponding exit groups. When the number of exits 19 is 10, M is 3 for two of the corresponding exit groups, and M is 2 for the other two corresponding exit groups. When the number of exits 19 is 11, M is 3 for three of the corresponding exit groups, and M is 2 for the other one corresponding exit group. When the number of exits 19 is 12, M is 3 for all the corresponding exit groups.

A group of M turning positions 75 associated with M exits 19 associated with one X-direction path is a turning position group. In the present embodiment, multiple turning position groups are arranged in the form of a V shape as viewed vertically. The turning position group includes, for example, multiple (two in the illustrated example) turning positions 75 arranged continuously in the X-direction. In the present embodiment, each of the X-direction path that can be an X-direction corresponding path 51 is a two-way path in a portion of the path.

### Third Embodiment

An article sorting facility 10 according to a third embodiment will be described below with reference to the drawings. In the present embodiment, the article sorting facility 10 includes connection paths 71, unlike in the second embodiment. The differences from the second embodiment will mainly be described below. The components and the structures not described below are the same as those in the second embodiment.

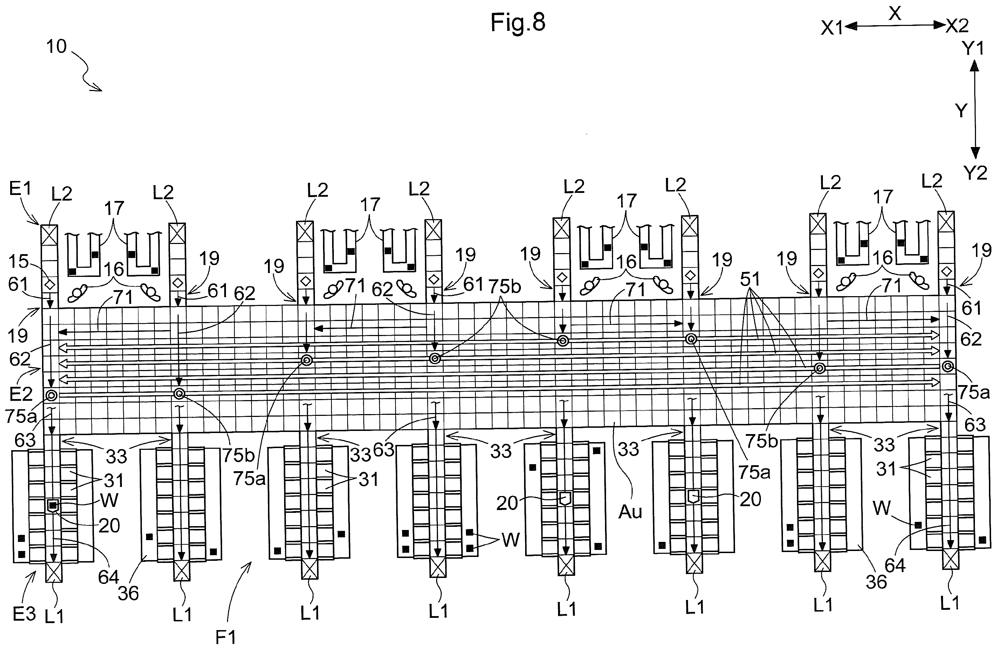

FIG. 8 is a diagram of a first layer F1 in the article sorting facility 10 according to the present embodiment, corresponding to FIG. 4. In the present embodiment, corresponding exit groups each include M exits 19 arranged continuously in the X-direction. The M exits 19 in each corresponding exit group are arranged adjacent to each other in the X-direction.

In the present embodiment, each X-direction path that can be an X-direction corresponding path 51 is a one-way path. At least one of the X-direction paths that can be an X-direction corresponding path 51 is a one-way path travelable in either of the directions opposite to each other from a specific position 75a. In the illustrated example, in a portion of the connection area E2, each X-direction path that can be an X-direction corresponding path 51 is a one-way path travelable in either of the directions opposite to each other from the specific position 75a. In the illustrated example, the specific positions 75a are arranged in the form of a V shape as viewed vertically.

In the present embodiment, an X-direction path that can be the X-direction corresponding path 51 associated with the exit 19 at the outermost end on the first side X1 in the X-direction is a one-way path extending from the specific position 75a toward the second side X2 in the X-direction. In the present embodiment, an X-direction path that can be the X-direction corresponding path 51 associated with the exit 19 at the outermost end on the second side X2 in the X-direction is a one-way path extending from the specific position 75a toward the first side X1 in the X-direction.

In the present embodiment, for each of the multiple corresponding exit groups, a connection path 71 connects the M exits in the corresponding exit group in the X-direction. The connection path 71 connects a Y-direction path connected to the specific position 75a and a Y-direction path not connected to the specific position 75a. In the illustrated example, the connection paths 71 each connect a Y-direction corresponding path 62 connected to a specific position 75a and a Y-direction corresponding path 62 not connected to the specific position 75a. The connection paths 71 are one-way paths. Each connection path 71 is a one-way path.

In the present embodiment, the turning positions 75 include the specific positions 75a. The turning positions 75 include unidirectional turning positions 75b. At a unidirectional turning position 75b, each transport vehicle 20 can turn toward one of the first side X1 in the X-direction or the second side X2 in the X-direction. In the present embodiment, multiple turning positions 75 are arranged on each X-direction path that can be an X-direction corresponding path 51, with one of the multiple turning positions 75 being a specific position 75a and the other turning positions 75 being unidirectional turning positions 75b. In the illustrated example, each transport vehicle 20 can turn, at the unidirectional turning position 75b, in a direction opposite to the direction toward the specific position 75a on the X-direction corresponding path 51.

### Fourth Embodiment

An article sorting facility 10 according to a fourth embodiment will be described below with reference to the drawings. In the present embodiment, the turning positions 75 are fewer than the exits 19, unlike in the third embodiment. The differences from the third embodiment will mainly be described below. The components and the structures not described below are the same as those in the third embodiment.

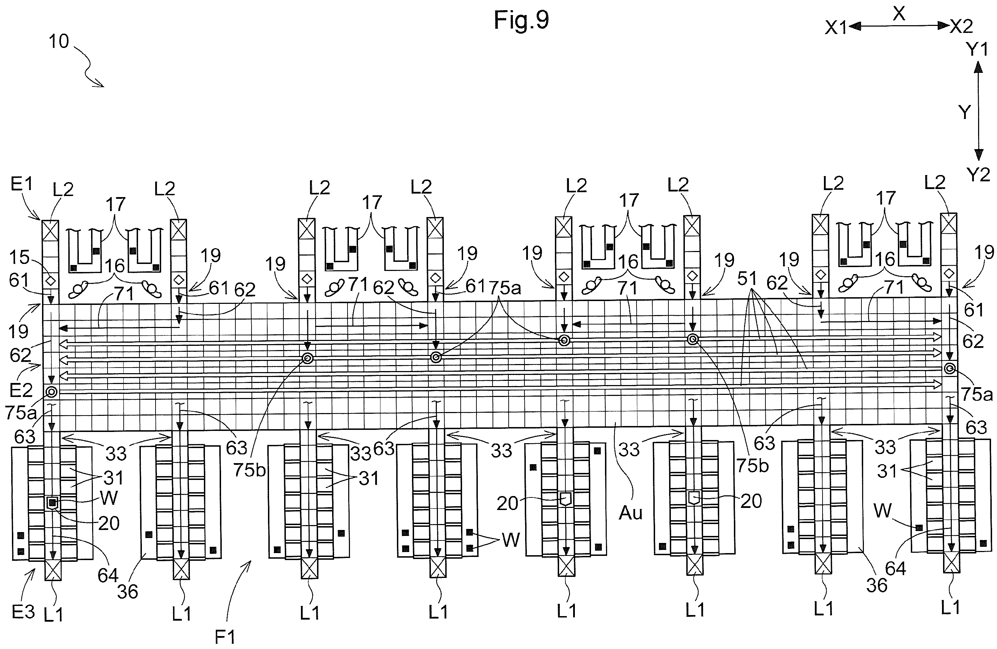

FIG. 9 is a diagram of a first layer F1 in the article sorting facility 10 according to the present embodiment, corresponding to FIG. 4. In the present embodiment, at least one of the connection paths 71 connects a Y-direction corresponding path 62 that is connected to a specific position 75a and a Y-direction corresponding path 62 that neither intersects with an X-direction corresponding path 51 nor is connected to the specific position 75a. In the example in FIG. 9, one of the connection paths 71 connects the Y-direction corresponding path 62 at the outermost end in the X-direction in the connection area E2 and the Y-direction corresponding path 62 at the second outermost position in the X-direction in the connection area E2. This eliminates turning positions 75 on the Y-direction corresponding paths 62 at the second outermost positions in the X-direction, thus reducing the number of intersections of travel paths. In this case, a transport vehicle 20 traveling from the exit 19 at the second outermost position in the X-direction to the corresponding first end 33 at either of the second outermost positions in the X-direction travels on the Y-direction corresponding path 62 at either of the outermost ends in the X-direction.

### Fifth Embodiment

The article sorting facility 10 according to a fifth embodiment will be described below with reference to the drawings. In the present embodiment, the floor E on which the multiple transport vehicles 20 travel includes a single layer, unlike in the first embodiment. The differences from the first embodiment will mainly be described below. The components and the structures not described below are the same as those in the first embodiment.

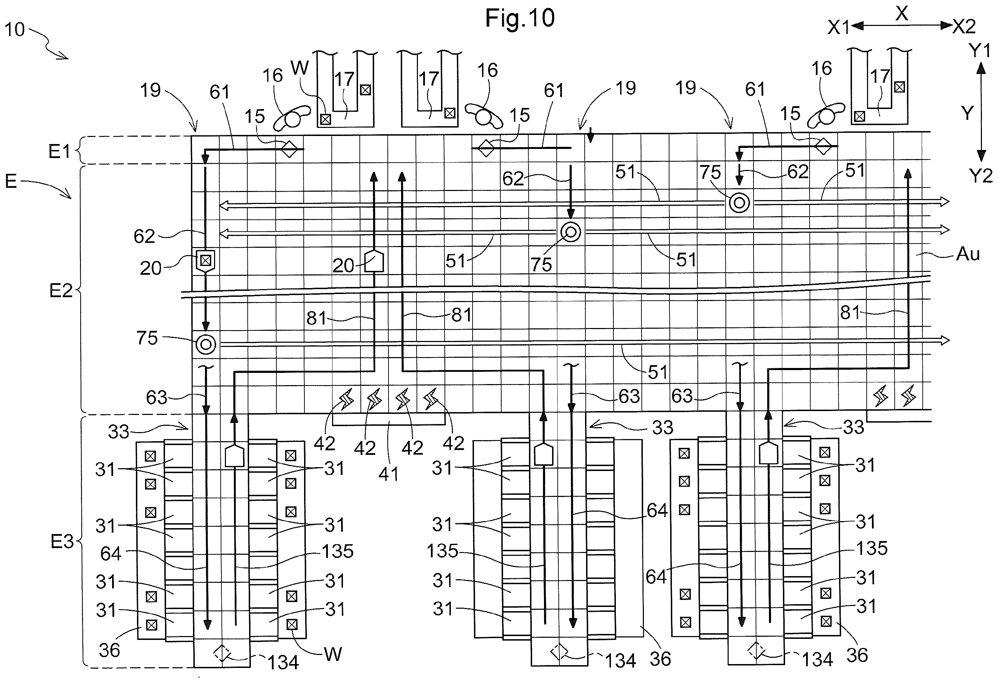

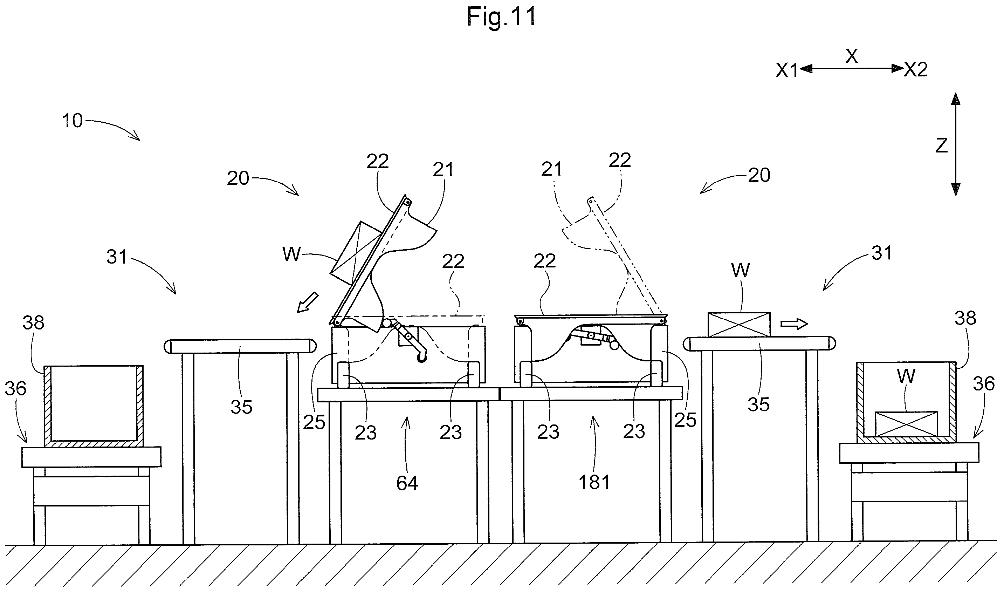

FIG. 10 is a top view of the article sorting facility 10 according to the present embodiment. FIG. 11 is a front view of a receiving area E3 in the present embodiment. In the present embodiment, U-turn positions 134 are arranged on the second side Y2 in the Y-direction relative to the first ends 33. In the illustrated example, the U-turn positions 134 are at the terminal ends of the receiving areas E3 on the second side Y2 in the Y-direction.

In the present embodiment, each receiving area E3 includes a receiving outgoing path 64 to allow the transport vehicles 20 to travel from the first end 33 to the U-turn position 134. Each receiving area E3 includes a receiving return path 135 to allow the transport vehicles 20 that have U-turned at the U-turn position 53 to travel from the U-turn position 134 to the first end 33. The connection area E2 includes return aisles 81 to allow the transport vehicles 20 to travel from the first ends 33 to the respective supply areas E1.

In the present embodiment, the receiving outgoing path 64 and the receiving return path 135 are arranged in the X-direction in each receiving area E3. In the present embodiment, as shown in FIGs. 10 and 11, the transport vehicles 20 transfer, on the receiving outgoing path 64, the articles W to the receivers 31 arranged opposite to the receiving return path 135 in the X-direction in each receiving area E3, and transfer, on the receiving return path 135, the articles W to the receivers 31 arranged opposite to the receiving outgoing path 64 in the X-direction in each receiving area E3. In the present embodiment, each receiving return path 135 is a one-way path.

### Sixth Embodiment

An article sorting facility 10 according to a sixth embodiment will be described below with reference to the drawings. In the present embodiment, the receiving areas E3 do not include an aisle area, unlike in the fifth embodiment. The differences from the fifth embodiment will mainly be described below. The components and the structures not described below are the same as those in the fifth embodiment.

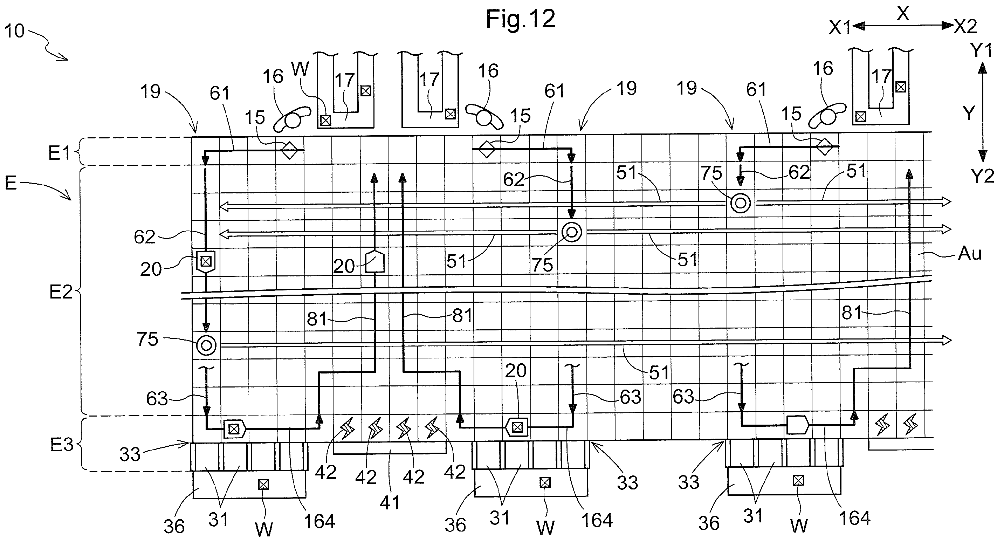

FIG. 12 is a top view of the article sorting facility 10 according to the present embodiment, corresponding to FIG. 10. In the present embodiment, the receiving areas E3 each include multiple receivers 31 arranged in the X-direction. The multiple receivers 31 in each receiving area E3 are arranged in the X-direction. Each receiving area E3 includes a receiving path 164 extending in the X-direction. The transport vehicles 20 transfer the articles W to the respective receivers 31 arranged in the X-direction and adjacent to the receiving paths 164. In the present embodiment, each receiving path 164 is a one-way path.

### Other Embodiments

Article sorting facilities 10 according to other embodiments will now be described.
(1) In the above embodiments, the difference between the maximum value and the minimum value of the number of exits 19 associated with the respective X-direction paths in the connection area E2 is 0. In some embodiments, for example, three exits 19 may be associated with one of the X-direction paths and one exit 19 may be associated with each of the other X-direction paths.
(2) In the above embodiments, the number of X-direction paths in the connection area E2 is the same as the number of exits 19, and the same as the number of X-direction corresponding paths 51. In some embodiments, for example, the exits 19 may each be associated with the same number of or a different number of multiple X-direction corresponding paths 51. For example, the exits 19 may each be associated with a different number of X-direction corresponding paths 51, in a manner such as one of the exits 19 being associated with three X-direction corresponding paths 51 and the other exits 19 being associated with two X-direction corresponding paths 51. For example, the X-direction corresponding paths 51, the Y-direction corresponding paths 62, or the corresponding connection paths 63 may not be straight and may each include a curved portion.
(3) In the above embodiments, the Y-direction corresponding paths 62 and the X-direction corresponding paths 51 associated with the respective exits 19 intersect at the turning positions 75. The turning positions 75 are arranged in the form of a V shape as viewed vertically. In some embodiments, for example, the turning positions 75 may be arranged in the form of a trapezoidal shape as viewed vertically. For example, the article sorting facility 10 may include, adjacent to the connection area E2, another area including dedicated paths each connecting one exit 19 in the supply area E1 to one first end 33 in the receiving area E3.
(4) In the above embodiments, the supply areas E1 are in the form of aisles extending in the Y-direction. In some embodiments, for example, each supply area E1 may be planar and extend in the Y-direction and the X-direction, including one exit 19.
(5) In the above embodiments, the receiving areas E3 are aisle areas extending in the Y-direction. In some embodiments, for example, each receiving area E3 may be planar and extend in the Y-direction and the X-direction, including one receiver 31. For example, the receiving area E3 may include an aisle area and another area other than the aisle area.
(6) In the above embodiments, the floor E includes the first layer F1 and the second layer F2 adjacent to each other in the Z-direction. In some embodiments, for example, the first layer F1 and the second layer F2 may not be adjacent to each other in the Z-direction. For example, the floor E may include three or more floors arranged in the Z-direction. For example, the second layer F2 may include the supply areas E1, the connection area E2, and the receiving areas E3, and the first layer F1 may include the return aisles 81.
(7) In the above embodiments, the exits 19 in the supply areas E1 are aligned with the respective first ends 33 in the receiving areas E3 as viewed in the Y-direction, and the connection area E2 connects the exits 19 and the first ends 33 to allow the transport vehicles 20 to travel between the areas. In some embodiments, for example, the number of exits 19 in the supply areas E1 may not be the same as the number of first ends 33 in the receiving areas E3, and none of the exits 19 may be aligned with the corresponding first end 33 as viewed in the Y-direction. For example, the connection areas E2 may connect the supply areas E1 and the receiving areas E3 not to allow travel of the transport vehicles 20 between the areas. The transport vehicles 20 may be transferred by a transfer device between the supply areas E1 and the receiving areas E3.
(8) In the above embodiments, a transport vehicle 20 traveling on an X-direction corresponding path 51 turns toward the second side Y2 in the Y-direction at the position 76 associated with the receiving area E3 of a destination in the X-direction to enter the receiving area E3 of the destination. In some embodiments, for example, a transport vehicle 20 traveling on an X-direction corresponding path 51 may turn toward the second side Y2 in the Y-direction at any position on the X-direction corresponding path 51 to enter the receiving area E3 of the destination. For example, the positions 76 may not be aligned with the respective first ends 33 as viewed in the Y-direction.
(9) In the above embodiments, the supply areas E1 and the connection area E2 are separated by the virtual boundaries, and the receiving areas E3 at the outermost ends in the X-direction define the outer edges of the floor E. In some embodiments, for example, the supply areas E1, the connection area E2, and the receiving areas E3 may be defined by the physical outer edges of the floor E and may each be an area in which the transport vehicles 20 are movable. For example, the supply areas E1, the connection area E2, and the receiving areas E3 may all be virtually defined areas on a large floor E. For example, the floor E may include areas different from the supply areas E1, the connection area E2, and the receiving areas E3, such as buffer areas in which multiple transport vehicles 20 can be in line.
(10) In the above embodiments, the control system 45 includes a host controller that controls the multiple transport vehicles 20 and the controller mounted on each transport vehicle 20. In some embodiments, for example, the control system 45 may be a system in which the controller on each transport vehicle 20 communicates with the controller on another transport vehicle 20 to autonomously determine the operation. For example, the floor E may include no position information holder. Position information about the transport vehicles 20 may be obtained by, for example, image sensors installed in the transport vehicles 20 or the facility. For example, the article sorting facility 10 may not include the control system 45.
(11) In the above embodiments, the control system 45 controls the transferrer 21 and the traveler 25 in each transport vehicle 20. In some embodiments, for example, the controller 46 may control only the traveler 25 in each transport vehicle 20. For example, each transport vehicle 20 may not include the transferrer 21, and the operating entity 16 may transfer the article W on the transport vehicle 20. For example, articles W may be stored in a compartment included in the transport vehicles 20. For example, the control system 45 may control an operation device, which is the operating entity 16.
(12) In the above embodiments, the article sorting facility 10 includes the supply transporters 17, the receiving transporters 35, and the shipping devices 36. In some embodiments, for example, the article sorting facility 10 may not include the supply transporters 17, the receiving transporters 35, or the shipping devices 36. An operator or a vehicle operated by the operator may transport articles W or the containers 38.
(13) In the above embodiments, the connection area E2 includes the charging positions 42 for charging the transport vehicles 20 with the chargers 41. In some embodiments, for example, the charging positions 42 may be arranged in other areas accessible to the supply areas E1, the receiving areas E3, and the connection area E2.
(14) In the above embodiments, the article sorting facility 10 includes the first lifters L1 and the second lifters L2. In some embodiments, for example, the article sorting facility 10 may not include the first lifters L1. The transport vehicles 20 may be transported with, for example, a lifter or an aisle connecting the connection area E2 in the first layer F1 and the second layer F2. For example, the second lifters L2 may connect the connection area E2 in the first layer F1 and the aisle connection area E4 in the second layer F2.
(15) In the above embodiments, the article sorting facility 10 includes the first lifters L1 and the second lifters L2. In some embodiments, for example, the article sorting facility 10 may not include the first lifters L1. The transport vehicles 20 may be transported with, for example, a lifter or an aisle connecting the connection area E2 in the first layer F1 and the second layer F2. For example, the second lifters L2 may connect the connection area E2 in the first layer F1 and the aisle connection area E4 in the second layer F2.
(16) The structure described in each of the above embodiments may be combined with any other structures described in the other embodiments unless any contradiction arises. For other structures as well, the embodiments described herein are merely illustrative in all aspects. Thus, the embodiments described herein may be modified variously as appropriate without departing from the spirit and scope of the present disclosure.

### Overview of Embodiment

The article sorting facility according to one or more embodiments of the present disclosure will be described below.

In one aspect, an article sorting facility is an article sorting facility in which a plurality of transport vehicles travel on a floor and transport articles to sort the articles. The article sorting facility includes a plurality of supply units that supply the articles to the plurality of transport vehicles, and a plurality of receivers that receive the articles from the plurality of transport vehicles. The floor includes a plurality of receiving areas, a plurality of supply areas, and a connection area. The plurality of receiving areas each include receivers, among the plurality of receivers, arranged in an X-direction. The X-direction is along the floor. The plurality of supply areas each include a supply unit among the plurality of supply units. The plurality of supply areas are arranged on a first side in a Y-direction relative to the plurality of receiving areas. The Y-direction is along the floor and perpendicular to the X-direction. The plurality of supply areas each include an exit among a plurality of exits arranged in the X-direction. The connection area extends in the Y-direction and the X-direction and connects the plurality of exits and the plurality of receiving areas to each other. The connection area includes a plurality of X-direction paths arranged in the Y-direction. The plurality of X-direction paths are paths on which the plurality of transport vehicles travel in the X-direction. Each of the plurality of exits is associated with an X-direction corresponding path among X-direction corresponding paths that are the plurality of X-direction paths. When entering the connection area through an exit among the plurality of exits to travel in the X-direction, each of the plurality of transport vehicles turns toward a first side or a second side in the X-direction on the X-direction corresponding path associated with the exit to travel on the X-direction corresponding path. The X-direction corresponding path associated with a corresponding exit among the plurality of exits and having the corresponding exit closer to either outermost end of the connection area in the X-direction is disposed farther on a second side in the Y-direction.

This structure reduces the likelihood that a transport vehicle traveling from an exit to an X-direction corresponding path is obstructed by another transport vehicle before reaching the X-direction corresponding path at positions closer to the X-direction corresponding path in the Y-direction from the exit. This structure also reduces the likelihood that a transport vehicle traveling from an exit to an X-direction corresponding path is obstructed by another transport vehicle before reaching the X-direction corresponding path at the positions closer to either outermost end of the connection area in the X-direction. This structure thus achieves a similar level of easiness in each of the multiple supply areas for the transport vehicle to travel from the exit to the X-direction corresponding path. This reduces the likelihood that the transport vehicles stopping for other transport vehicles concentrate near the exit of a specific supply area. The efficiency of transporting articles with the transport vehicles is thus less likely to decrease in the overall article sorting facility.

In one aspect, the plurality of transport vehicles traveling in the Y-direction after entering the connection area through the plurality of respective exits travel on Y-direction corresponding paths. The plurality of transport vehicles entering the connection area through the plurality of respective exits turn toward the first side in the X-direction or the second side in the X-direction at turning positions at which the Y-direction corresponding paths and the X-direction corresponding paths associated with the plurality of respective exits intersect. The turning positions are arranged in the form of a V shape as viewed vertically.

In this structure, the X-direction corresponding path associated with the corresponding exit among the plurality of exits and having the corresponding exit closer to either outermost end of the connection area in the X-direction is disposed farther on the second side in the Y-direction as appropriate.

In one aspect, the plurality of receiving areas each include an aisle area extending in the Y-direction. The plurality of receivers are arranged in the Y-direction along the respective aisle areas.

This structure allows the article sorting facility to include more receivers with fewer transport vehicles traveling in the Y-direction in the connection area than an article sorting facility with a structure without an aisle area in each receiving area. This reduces the likelihood of congestion of the transport vehicles traveling in the connection area, thus increasing the efficiency of transporting articles with the transport vehicles.

The article sorting facility according to one or more embodiments of the present disclosure may produce at least one of the above advantageous effects. The technical features of the article sorting facility according to one or more embodiments of the present disclosure are applicable to an article sorting method and an article sorting program.

### REFERENCE SIGNS LIST

- 10: article sorting facility
- 15: supply unit
- 19: exit
- 20: transport vehicle
- 31: receiver
- 51: X-direction corresponding path
- 62: Y-direction corresponding path
- 75: turning position
- E: floor
- E1: supply area
- E2: connection area
- E3: receiving area, aisle area
- W: articles

## Claims

1. An article sorting facility in which a plurality of transport vehicles travel on a floor and transport articles to sort the articles, the article sorting facility comprising:
a plurality of supply units configured to supply the articles to the plurality of transport vehicles; and
a plurality of receivers configured to receive the articles from the plurality of transport vehicles,
the floor including
a plurality of receiving areas each including receivers, among the plurality of receivers, arranged in an X-direction, the X-direction being along the floor,
a plurality of supply areas each including a supply unit among the plurality of supply units, the plurality of supply areas being arranged on a first side in a Y-direction relative to the plurality of receiving areas, the Y-direction being along the floor and perpendicular to the X-direction, and
a connection area,
the plurality of supply areas each including an exit among a plurality of exits arranged in the X-direction,
the connection area extending in the Y-direction and the X-direction and connecting the plurality of exits and the plurality of receiving areas to each other,
the connection area including a plurality of X-direction paths arranged in the Y-direction, the plurality of X-direction paths being paths on which the plurality of transport vehicles travel in the X-direction,
each of the plurality of exits being associated with an X-direction corresponding path among X-direction corresponding paths that are the plurality of X-direction paths,
each of the plurality of transport vehicles being configured to, when entering the connection area through an exit among the plurality of exits to travel in the X-direction, turn toward a first side or a second side in the X-direction on the X-direction corresponding path associated with the exit to travel on the X-direction corresponding path,
the X-direction corresponding path associated with a corresponding exit among the plurality of exits and having the corresponding exit closer to either outermost end of the connection area in the X-direction being disposed farther on a second side in the Y-direction.

2. The article sorting facility according to claim 1, wherein
the plurality of transport vehicles traveling in the Y-direction after entering the connection area through the plurality of respective exits travel on Y-direction corresponding paths,
the plurality of transport vehicles entering the connection area through the plurality of respective exits turn toward the first side in the X-direction or the second side in the X-direction at turning positions at which the Y-direction corresponding paths and the X-direction corresponding paths associated with the plurality of respective exits intersect, and
the turning positions are arranged in the form of a V shape as viewed vertically.
